# FASCICULE DE BREVET EUROPEEN

(11) **EP 0 698 255 B1**
(45) Date de publication et mention de la délivrance du brevet: **16.04.1997**
(21) Numéro de dépôt: 94916279.6
(22) Date de dépôt: 11.05.1994
(51) Int. Cl.: G06K 17/00, H04L 12/40

(54) **PROCEDE DE GESTION DE LA TRANSMISSION DES MESSAGES D'UN ENSEMBLE D'EMETTEURS VERS UN RECEPTEUR UNIQUE SUR UN CANAL UNIQUE**
VERFAHREN ZUR STEUERUNG DER NACHRICHTENÜBERTRAGUNG VON EINEM SENDERSATZ DURCH EINEN EINZIGEN KANAL ZU EINEM EINZIGEN EMPFÄNGER
METHOD OF MANAGING THE TRANSMISSION OF MESSAGES FROM A SET OF TRANSMITTERS TO A SINGLE RECEIVER ON A SINGLE CHANNEL

(30) Priorité: 12.05.1993 FR 9305723
(43) Date de publication de la demande: 28.02.1996
(73) Titulaire: GEMPLUS CARD INTERNATIONAL, F-13420 Gemenos (FR)
(72) Inventeur: CHARRAT, Bruno, F-13400 Aubagne (FR)
(74) Mandataire: Schmit, Christian Norbert Marie
(86) Numéro de dépôt international: FR9400569
(87) Numéro de publication internationale: WO9427253

(56) Documents cités:
- EP-A- 0 405 695
- GB-A- 2 259 387

## Description

La présente invention se rapporte aux procédés qui permettent de gérer la transmission des messages provenant d'un ensemble d'émetteurs vers un récepteur unique qui leur est commun, lorsque la voie de transmission est formée d'un canal unique sur lequel doivent transiter tous ces messages.

Dans un système de transmission comportant plusieurs émetteurs et un seul récepteur reliés ensemble par un canal unique, il est essentiel de gérer la transmission des messages afin de ne pas apporter de confusion entre ceux-ci. Dans un réseau de radiotéléphonie par exemple, on utilise une procédure essentiellement verbale qui repose fondamentalement sur l'intelligence des opérateurs. Dans un système de transmission de données, qui fonctionne généralement de manière automatique, on utilise une procédure plus figée qui est mise en oeuvre par des dispositifs logiques situés tant dans les émetteurs que dans le récepteur. Ces procédures sont connues par exemple sous les noms de ALOHA, CSMA, CSMA/CD ....

Dans la plupart de ces procédés, on utilise un système d'envoi de messages d'acquittement qui est réalisé par l'émission de données depuis le récepteur principal unique vers les émetteurs. Ces émetteurs doivent donc comporter un système de réception de données qui présente nécessairement une certaine complexité.

C'est également le cas dans les procédés anti-collision de type CSMA où l'on écoute le canal de transmission pour détecter une collision éventuelle, ou bien où l'on émet depuis le récepteur une indication de collision lorsque celle-ci a eu lieu. Là aussi les récepteurs doivent comporter un système de réception de données d'une complexité non-négligeable.

On développe à l'heure actuelle des systèmes qui comportent des émetteurs reliés à un récepteur unique par un canal unique. A titre d'exemple, on citera les badges hyperfréquence qui sont prévus pour de nombreux usages, par exemple le contrôle d'accès, le paiement des péages d'autoroute. On tente de réaliser ces badges sous la forme d'une carte ayant de préférence les dimensions et le poids d'une carte de crédit intégrant éventuellement une pile dont la durée doit être de plusieurs années. On conçoit bien que dans ce cas l'ajout d'un récepteur de données et la complexité de la gestion de la transmission puisse être prohibitif à tous points de vue.

Comme en outre ces cartes fonctionnent nécessairement sur une fréquence unique, puisqu'elles doivent être réalisées à de très nombreux exemplaires et pouvoir fonctionner en des endroits distincts répartis en grand nombre sur le territoire, il est absolument impératif de gérer la collision des messages qu'elles transmettent de manière presque simultanée vers un même récepteur. Il est important que le système de réception de données ainsi que les procédures de gestion soient extrêmement simplifiés car ces émetteurs doivent être petits et peu coûteux.

Ce problème n'a pas, jusqu'à présent, été résolu de manière satisfaisante.

Pour résoudre ce problème, l'invention propose un procédé de gestion de la transmission des messages d'un ensemble d'émetteurs vers un récepteur unique sur un canal unique selon la revendication 1.

Le document EP-A- 0 405 695 divulgue un procédé selon le préambule de la revendication 1. Selon GB-A- 2 259 387, tous les émetteurs dans un champ interrogatif testent l'état d'occupation du canal en permanence après sychronisation effectuée par le récepteur.

D'autres particularités et avantages de l'invention apparaîtront clairement dans la description suivante, présentée à titre d'exemple non limitatif en regard des figures annexées qui représentent :
- la figure 1, un schéma d'un ensemble d'émetteurs reliés à un récepteur unique.
- la figure 2, un premier diagramme de temps;
- la figure 3, un schéma simplifié d'un émetteur;et
- la figure 4, un deuxième diagramme de temps.
- la figure 5, un diagramme des temps dans le cas d'une transmission full-duplex

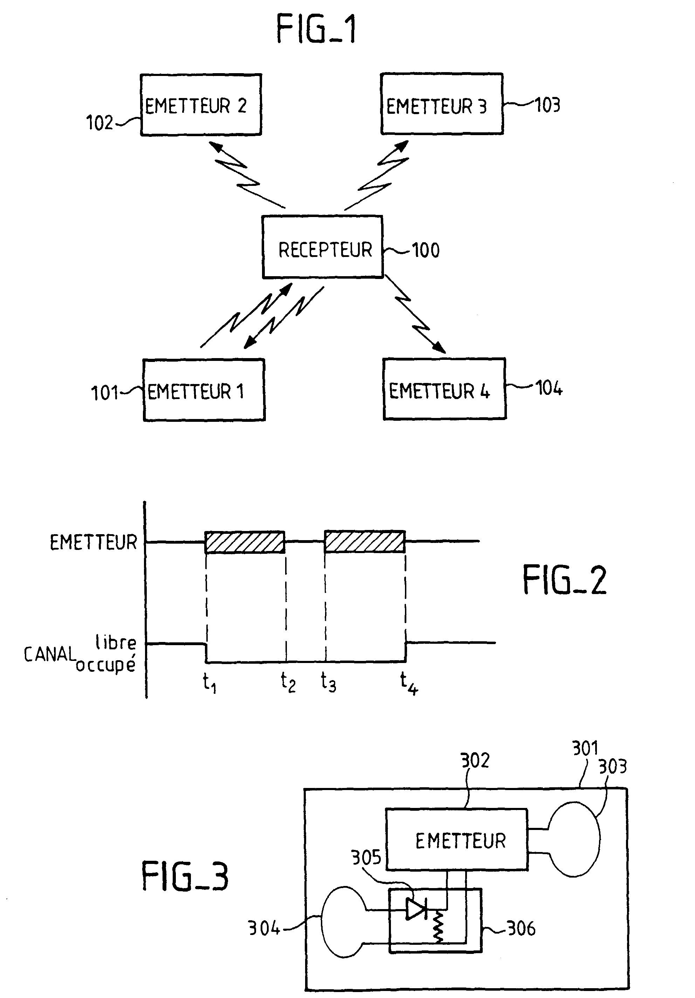

Dans la description qui va suivre on va pour simplifier, parler de récepteur pour l'organe chargé de recevoir des données émises par un ensemble d'émetteurs fonctionnant sur une fréquence unique étant bien entendu que tous ces éléments sont émetteurs-récepteurs. Un tel système a été représenté schématiquement sur la figure 1. Ainsi, le récepteur 100 est susceptible de recevoir des données depuis un ensemble d'émetteurs, quatre émetteurs 101 à 104 sont représentés sur cette figure.

Selon l'invention, lorsque l'un des émetteurs, 101 par exemple, commence à émettre ses données vers le récepteur 100, celui-ci retransmet en retour un signal d'occupation extrêmement simple. Il peut s'agir d'une porteuse non modulée par exemple dans le cas de transmission hyperfréquence, et ce signal est reçu par tous les émetteurs. Ce signal d'occupation transmet donc une information binaire. Les émetteurs 102 à 104, qui ne sont pas en train de transmettre des données au récepteur, interprètent ce signal comme un signal d'occupation du canal commun à tous les émetteurs et s'abstiennent alors, pendant toute la durée où ce signal d'occupation est reçu, d'émettre des données qu'ils auraient éventuellement à transmettre. Lorsque l'émetteur 101 a fini de transmettre son message, il cesse sa transmission et le récepteur cesse alors d'émettre le signal d'occupation, ce qui libère le canal permettant ainsi à un autre des émetteurs d'en disposer pour émettre à son tour.

Le dispositif pour mettre en oeuvre ce procédé peut comprendre par exemple, toujours dans l'exemple d'une transmission hyperfréquence, dans le récepteur un simple oscillateur relié à une antenne d'émission et mis en fonctionnement par la détection de la réception du signal de l'émetteur. L'émetteur par ailleurs peut être par exemple, comme représenté de manière très simplifiée sur la figure 3, un badge hyperfréquence 301 portant un émetteur 302 relié à une boucle d'émission accordée 303. Ce badge comprend alors selon l'invention une boucle de réception 304 accordée sur la fréquence du signal d'occupation reçu du récepteur 100. Le signal reçu sur cette boucle est redressé par une diode 305, ce qui délivre une tension continue appliquée à l'émetteur 302 qui, lorsqu'il n'est pas en état d'émission, se trouve bloqué par cette tension. L'absence de blocage lorsque l'émetteur est déjà en fonction d'émission peut être obtenue par un système logique 306 très simple tel que représenté sur la figure 3.

Cet exemple simplifié à l'extrême permet de comprendre le principe de l'invention, mais il laisse en suspens la résolution d'un certain nombre de problèmes.

Le premier de ces problèmes consiste à gérer les acquittements des messages, c'est-à-dire à indiquer à l'émetteur si les données reçues dans le récepteur sont correctes, afin que l'émetteur puisse, le cas échéant, ré-émettre ces données jusqu'à ce qu'elles soient reçues correctement, tout au moins dans certaines limites de temps.

Pour cela, de manière très simple, le récepteur analysera les données reçues et vérifiera leur validité selon des méthodes connues, de parité par exemple. Lorsque ces données seront reconnues comme correctes, dans les limites habituelles procurées par ces systèmes, le récepteur arrêtera l'émission du signal d'occupation du canal. Si par contre ces données ne sont pas reconnues comme correctes, ce signal continuera à être émis et l'émetteur 101 interprétera l'absence d'arrêt de cette émission comme l'indication d'une mauvaise réception et une invitation à ré-émettre le message. Le processus sera alors itéré un nombre suffisant de fois jusqu'à ce que la réception soit correcte.

Pour éviter toutefois d'occuper en permanence le canal sur une erreur systématique, une très mauvaise transmission par exemple, cette ré-émission sera limitée à un nombre adéquat de fois déterminé essentiellement en fonction du nombre d'émetteurs susceptibles d'attendre leur tour pour émettre.

Ce séquencement a été représenté de manière symbolique sur la figure 2, où l'on voit sur la ligne du haut, les périodes d'émission de l'émetteur représentées par des rectangles en grisé, et sur la ligne du bas les états libre ou occupé du canal représentés par des signaux haut et bas.

Lorsque l'émetteur se met à émettre une première fois son message, le canal passe de l'état libre à l'état occupé, correspondant à l'émission du signal d'occupation, à l'instant t1. L'émetteur termine sa première émission à l'instant t2 et, dans l'exemple représenté sur la figure, le récepteur détermine que le message reçu est incorrect. Il continue donc à émettre son signal d'occupation du canal, ce qui continue à bloquer l'émission des autres émetteurs mais indique à l'émetteur en service que le message a été mal reçu. Cet émetteur en service ré-émet donc son message à partir de l'instant t3 jusqu'à l'instant t4. A cet instant t4, dans cet exemple, le récepteur détermine que le message est bien reçu et il cesse donc d'émettre le signal d'occupation. L'état du canal redevient alors libre, ce qui permet aux autres émetteurs de prendre la main. Il est également souhaitable de traiter le problème des collisions d'émission lorsque plusieurs émetteurs veulent se mettre en route simultanément. Dans des systèmes simples ceci pourrait se traiter de manière implicite, d'une part en comptant sur le fait que cette situation sera relativement rare parce que le système ne comprend pas beaucoup d'émetteurs, et d'autre part parce que si plusieurs émetteurs se mettent à émettre simultanément, la réception sera nécessairement mauvaise et ils s'arrêteront donc de transmettre au bout du nombre de ré-émissions prescrites pour éviter les embouteillages.

Cette solution n'est toutefois pas très satisfaisante en elle-même et elle devient rapidement inefficace dès que le nombre d'émetteurs atteint un volume tant soit peu conséquent.

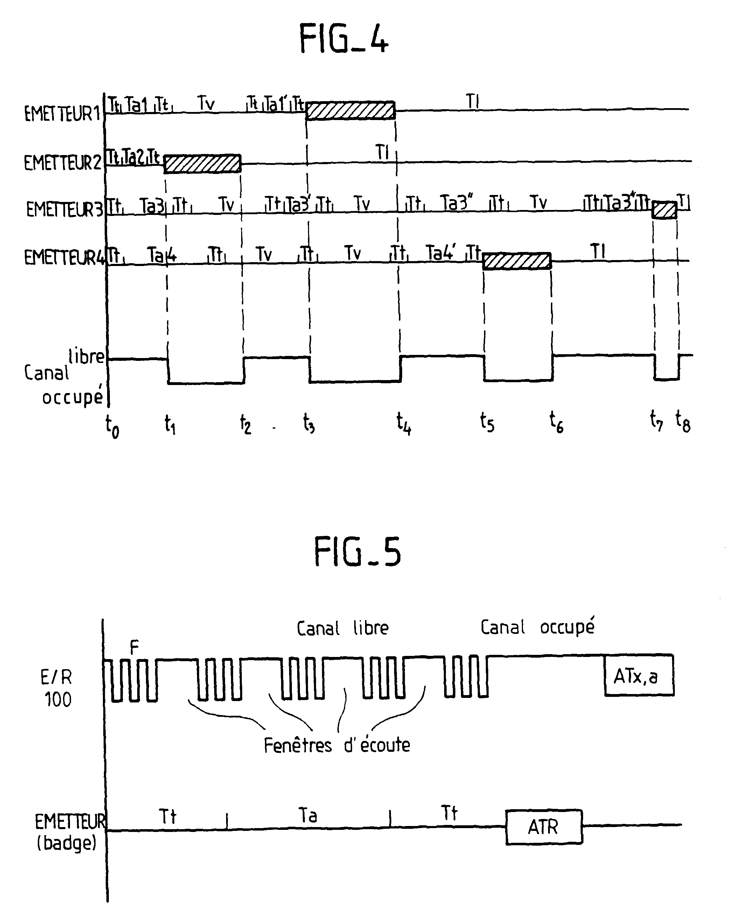

Pour résoudre ce problème, l'invention propose en outre d'utiliser un séquencement légèrement plus compliqué, illustré par exemple sur la figure 4.

Tout d'abord, chaque émetteur avant d'émettre teste l'occupation du canal pendant une durée Tt qui peut être relativement courte et de valeur identique pour chacun des émetteurs.

Deux cas se présentent alors :
- si le canal est occupé, l'émetteur se met en veille pendant une durée Tv assez longue, de préférence plus longue que la durée maximale de transmission prévue pour un message.
- si le canal est libre, ceci indique qu'aucun autre émetteur ne transmet, mais on court alors le risque que plusieurs émetteurs ne se mettent à transmettre en même temps à la fin de la durée Tt. Pour éviter cela, l'émetteur se met alors en veille pendant une durée aléatoire Ta, puis il teste de nouveau l'occupation du canal pendant la durée Tt et se met alors à transmettre si le canal est toujours libre à la fin de cette durée.

Si par contre, à la fin de cette durée Ta le canal est occupé par un émetteur qui a commencé à transmettre entre temps, on se retrouve dans le premier cas et la séquence recommence. La répartition des aléas dans les durée Ta, aussi bien entre les émetteurs qu'entre les périodes successives d'un même émetteur est telle que le risque de voir démarrer deux émissions simultanées sur deux émetteurs différents est quasiment nul.

Dans les cas extrêmement rares où cela se produirait, on se retrouverait en erreur de réception et l'on sortirait de la collision après le nombre prescrit de répétitions, comme dans le cas du système non protégé contre les collisions tel qu'on l'a expliqué plus haut.

En se reportant à la figure 4, on voit qu'en supposant qu'au temps t0 les quatre émetteurs cherchent à transmettre, ils testent tous les quatre le canal pendant la durée Tt, puis ils se mettent en veille pendant les durées Ta1, Ta2, Ta3, et Ta4. Comme Ta2 est la durée la plus courte, lorsque l'émetteur 2 teste de nouveau ensuite pendant la durée Tt l'état du canal, il le trouve libre et il se met alors à transmettre à l'instant tl, ce qui est représenté par le rectangle en grisé.

En fonction des durées des autres temps de veille aléatoire, à l'instant t1 l'émetteur 1 se trouve dans une durée Tt de test du canal et les émetteurs 3 et 4 se trouvent toujours dans leurs durées de veille aléatoire Ta3 et Ta4.

En supposant dans cet exemple pour la simplicité que la réception est bonne, l'émission de l'émetteur 2 se termine au temps t2 et le canal redevient libre. Pour permettre alors à un maximum des autres émetteurs de transmettre les messages qu'ils auraient à transmettre, l'émetteur 2 se met alors en veille pendant une durée T1 relativement longue, pour permettre par exemple aux trois autres émetteurs d'avoir le temps de transmettre leurs messages, compte tenu également des durées de veille et de test.

Dans cet exemple, à cet instant t2 on constate sur la figure que l'on se trouve pendant la durée de veille Td de chacun des émetteurs 1, 3 et 4. A la fin de cette durée de veille, ces trois émetteurs passent dans une durée Tt de test et la séquence test-veille aléatoire-test, redémarre pour chacun d'eux. Compte tenu des durées de veille aléatoire, c'est cette fois-ci l'émetteur 1 qui trouve le premier le canal libre à l'instant t3 situé à la fin de la durée Tt qui suit la deuxième durée aléatoire Tal', alors que l'émetteur 3 est lui dans la durée aléatoire Ta3' et que l'émetteur 4 se trouve toujours dans une durée de test Tt suivant une durée de veille Tv.

L'émetteur 1 se met donc à transmettre son message et s'arrête au temps t4 pour passer en veille longue Tl.

A ce moment, on se trouve dans une durée de veille Tv pour l'émetteur 3, et dans une durée de test Tt suivant une durée de veille Tv pour l'émetteur 4. La séquence test-veille aléatoire-test, se déroule alors pour l'émetteur 4 et se termine avant que la même séquence, qui a démarré plus tard pour l'émetteur 3, ne se termine elle aussi. C'est donc l'émetteur 4 qui à l'instant t5 se met à transmettre, jusqu'à l'instant t6 où il passe en veille longue Tl.

A ce moment les trois émetteurs 1, 2 et 4 sont en veille longue et l'émetteur 3 est en durée de veille Tv.

C'est alors l'émetteur 3 qui commencera à émettre son message au temps t7 après une séquence Tt-Ta3"-Tt. Cette dernière séquence se déroule automatiquement, bien qu'elle ne soit pas ici nécessaire, parce que l'on pourrait très bien se trouver dans des configurations où on en ait besoin, en fonction de la succession aléatoire des messages et compte tenu de ce que la durée Tl a une durée nécessairement finie.

Le message de l'émetteur 3 s'arrête au temps t8, à partir duquel il se met en veille longue Tl. C'est alors le premier des émetteurs qui arrive au bout de sa durée de veille longue et qui a besoin d'émettre un nouveau message qui repart dans une séquence de test du canal. Sur la figure c'est l'émetteur 2 qui se trouve dans ce cas.

Afin de permettre la transmission d'un maximum de messages, on aura intérêt à s'arranger pour que la somme des durées Tt+Ta+Tt soit toujours inférieure au temps minimum de transmission du message. On remarque que cette condition n'est pas respectée sur la figure afin d'avoir une plus grande lisibilité.

L'invention s'applique à tout système radio-fréquence ou a des systèmes à couplage pour induction. L'invention s'applique bien sûr à une transmission half-duplex. Dans ce cas l'émetteur-récepteur 100 émet un signal modulé sur une porteuse. Lorsqu'un émetteur (badge) se trouve dans le champ d'émission de l'émetteur-récepteur 100, l'émetteur (badge) teste le canal pendant la durée Tt pour savoir si ce canal est libre ou occupé.

Le canal est libre lorsque la fréquence de réveil est présente (lorsque la porteuse est présente). Le canal est occupé lorsque la fréquence de réveil est absente. Des fenêtres d'écoute sont insérées au milieu de la fréquence de réveil (canal libre). Dès la réception du début d'un message (sous forme de trame ATR) l'émetteur-récepteur 100 déclare le canal occupé (absence de la porteuse). On pourra se reporter au schéma de la figure 5 qui illustre cet exemple.

## Revendications

1. Procédé de gestion de la transmission des messages d'un ensemble d'émetteurs vers un récepteur unique sur un canal unique, selon lequel, dès que le récepteur (100) reçoit l'émission de l'un des émetteurs (101-104), il transmet vers l'ensemble des émetteurs (101-104), pendant au moins toute la durée de transmission de l'émetteur actif, une information binaire indiquant que le canal est occupé, et la réception de cette même information binaire pour les autres émetteurs inhibe toute tentative d'émission de ces autres émetteurs, caractérisé en ce que lorsqu'un émetteur (101-104) est prêt à transmettre, il teste d'abord une première fois (Tt) l'état d'occupation du canal et lorsque le test indique que le canal est occupé, l'émetteur (101-104) se met en veille pendant une durée (Tv) sensiblement égale à la durée de transmission moyenne d'un message et lorsque le test indique que le canal est libre, il se met en veille pendant une durée aléatoire (Ta), il teste ensuite une deuxième fois (Tt) l'état d'occupation du canal et puis il se met à transmettre lorsque ce deuxième test indique que le canal est toujours libre.

2. Procédé selon la revendication 1, caractérisé en ce que le récepteur continue à transmettre ladite information binaire lorsque la réception du message transmis par l'émetteur actif est erronée, et que l'émetteur actif recommence la même transmission jusqu'à ce qu'elle soit reçue correctement et dans la limite d'un nombre déterminé de fois.

3. Procédé selon l'une quelconque des revendications 1 et 2, caractérisé en ce que lorsque l'émetteur actif a terminé sa transmission, il se met en veille pendant une durée suffisamment longue pour permettre à plusieurs autres émetteurs , de transmettre à leur tour.

4. Procédé selon l'une quelconque des revendications précédentes, caractérisé en ce que l'information binaire indiquant l'état d'occupation du canal est une porteuse non modulée.

## Patentansprüche

1. Verfahren zum Verwalten der Übertragung von Nachrichten von einem Satz von Sendern zu einem einzigen Empfänger über einen einzigen Kanal, bei dem bei Empfang durch den Empfänger (100) von der Ausstrahlung eines der Sender (101 - 104) dieser an den Satz von Sendern (101 - 104) während wenigstens der gesamten Dauer der Übertragung des aktiven Senders eine Binärinformation überträgt, die angibt, daß der Kanal belegt ist, und der Empfang dieser Binärinformation für die anderen Sender jeden Versuch des Sendens durch diese anderen Sender unterbindet,
dadurch gekennzeichnet, daß
wenn ein Sender (101 - 104) zum Übertragen bereit ist, er zunächst ein erstes Mal (Tt) den Belegtzustand des Kanals überprüft und wenn der Test ergibt, daß der Kanal belegt ist, sich der Sender (101 - 104) in einen Wartezustand während einer Dauer (Tv) begibt, die im wesentlichen gleich der mittleren Übertragungsdauer für eine Nachricht ist, und wenn der Test ergibt, daß der Kanal frei ist, er sich in einen Wartezustand während einer beliebigen Dauer (Ta) begibt, er danach ein zweites Mal (Tt) den Belegtzustand des Kanals überprüft und er sich dann zur Übertragung vorbereitet, wenn der zweite Test ergibt, daß der Kanal immer frei ist.

2. Verfahren nach Anspruch 1, dadurch gekennzeichnet, daß der Empfänger fortfährt, die Binärinformation zu übertragen, wenn der Empfang der durch den aktiven Sender übertragene Nachricht fehlerhaft ist, und daß der aktive Sender mit der gleichen Übertragung von vorne beginnt, bis diese korrekt und in einer vorgegebenen, begrenzten Zahl von Versuchen empfangen wurde.

3. Verfahren nach einem der Ansprüche 1 und 2, dadurch gekennzeichnet, daß bei Beendigung der Übertragung durch den aktiven Sender dieser sich in einen Wartezustand für eine Dauer begibt, die ausreichend lang ist, daß mehrere andere Sender ihre Übertragung durchführen.

4. Verfahren nach einem der vorangehenden Ansprüche, dadurch gekennzeichnet, daß die Binärinformation, die den Zustand der Besetzung des Kanals angibt, ein nichtmodulierter Träger ist.

## Claims

1. A method for managing the transmission of messages from an array of transmitters to a single receiver on a single channel, whereby as soon as the receiver (100) receives a transmission from one of the transmitters (101-104) it transmits to the array of transmitters (101-104), throughout the entire duration of transmission from the active transmitter at least, a binary message indicating that the channel is busy and reception of this same binary message inhibits any attempt by these other transmitters (101-104) to initiate a transmission, characterised in that when a transmitter (101-104) is ready to transmit, it initially tests the busy status of the channel a first time (Tt) and, if the test indicates that the channel is free, it switches to stand-by for a random period (Ta), then tests the busy status of the channel a second time (Tt) and then starts transmission if this second test indicates that the channel is still free, and, if the test indicates that the channel is busy, the transmitter (101-104) switches to stand-by for a period (Tv) essentially equal to the average duration required to transmit a message.

2. A method as claimed in claim 1, characterised in that the receiver continues to transmit the said binary message if the message transmitted by the active transmitter is incorrectly received and the active transmitter re-starts the same transmission until it is correctly received and does so for a given number of attempts.

3. A method as claimed in any one of claims 1 and 2, characterised in that when the active transmitter has terminated its transmission, it switches to stand-by for a long enough period to allow several other transmitters to transmit in turn.

4. A method as claimed in any one of the preceding claims, characterised in that the binary message indicating the busy status of the channel is a non-modulated carrier.
